(19) Europäisches Patentamt

European Patent Office

Office européen des brevets

(11) EP 0 603 244 B1

(12) **EUROPÄISCHE PATENTSCHRIFT**

(45) Veröffentlichungstag und Bekanntmachung des Hinweises auf die Patenterteilung:
**19.03.1997 Patentblatt 1997/12**

(21) Anmeldenummer: 92918965.2

(22) Anmeldetag: **09.09.1992**

(51) Int. Cl.$^6$: **B29C 45/76**, G05B 13/02

(86) Internationale Anmeldenummer:
**PCT/AT92/00117**

(87) Internationale Veröffentlichungsnummer:
**WO 93/04839** (18.03.1993 Gazette 1993/08)

(54) **VERFAHREN ZUR STEUERUNG EINER MASCHINE FÜR DIE HERSTELLUNG VON PRODUKTEN, INSBESONDERE ZUR STEUERUNG EINER SPRITZGIESSMASCHINE**

PROCESS FOR CONTROLLING A PRODUCTION MACHINE, IN PARTICULAR AN INJECTION MOULDING MACHINE

PROCEDE DE COMMANDE D'UNE MACHINE DE PRODUCTION, EN PARTICULIER UNE MACHINE DE MOULAGE PAR INJECTION

(84) Benannte Vertragsstaaten:
**AT CH DE IT**

(30) Priorität: **12.09.1991 AT 1823/91**

(43) Veröffentlichungstag der Anmeldung:
**29.06.1994 Patentblatt 1994/26**

(73) Patentinhaber: **Engel Maschinenbau Gesellschaft m.b.H.**
**A-4311 Schwertberg (AT)**

(72) Erfinder: **STEINBICHLER, Georg**
**A-8786 Rottenmann (AT)**

(74) Vertreter: **Hofinger, Engelbert, DDr. et al**
**Patentanwälte Torggler & Hofinger**
**Wilhelm-Greil-Strasse 16**
**6020 Innsbruck (AT)**

(56) Entgegenhaltungen:
**EP-A- 0 033 155          EP-A- 0 461 627**
**DE-A- 3 927 995          DE-A- 4 025 221**
**US-A- 4 992 948**

• **DIALOG Information Sevices Ind., File 351, DIALOG Acc.No. 009119781 Derwent Acc. No.92-247218/30, Week 9230, abstract of JP-A-4-168023 (KOBAYASHI N, PENTEL KK) 16 June 1991**

**Beschreibung**

Die Erfindung betrifft ein Verfahren zur Steuerung einer Maschine für die Herstellung von Produkten, insbesondere zur Steuerung einer Spritzgießmaschine für die Herstellung von Kunststoff-Spritzgußteilen, wobei in einem Lernzyklus Kenndatenfelder ermittelt und gespeichert werden, die die Abhängigkeit ausgewählter Qualitätsparameter der hergestellten Produkte von ausgewählten Einstellparametern der Maschine angeben.

Aus dem Patent US-A-4,992,948 ist ein Verfahren zur Steuerung einer Maschine für die Herstellung von Produkten bekannt, wobei Kenndatenfelder ermittelt und gespeichert werden, die die Abhängigkeit ausgewählter Qualitätsparameter der hergestellten Produkte von ausgewählten Einstellparametern der Maschine angeben.

Maschinen werden heute über maschinenspezische Einstellparameter eingestellt. Bei Spritzgießmaschinen sind dies beispielsweise die Massezylindertemperaturen, die Schneckendrehzahl, der Staudruck, die Durchflußmenge und die -temperatur eines Kühl- oder Temperiermediums, das Einspritzgeschwindigkeitsprofil, der Hydraulikdruck im Spritzzylinder, die Nachdruckszeit, die Kühlzeit etc. Aufgabe des Maschineneinstellers war es bisher, eine mögliche bzw. die beste Kombination von Einstellwerten für die wichtigen Einstellparameter nach wirtschaftlichen und qualitativen Gesichtspunkten zu finden. Aus den Einstellwerten ergeben sich Prozeßparameter (z.B. Massetemperatur, Schmelzedruck im Werkzeug oder Schneckenvorraum, Einspritzarbeit oder Fließzahl). Diese Prozeßparameter wiederum bestimmen neben der Formteil- und Werkzeugskonstruktion und dem ausgewählten Material (Kunststoff) entscheidend die Qualitätsmerkmale der hergestellten Produkte. Diese Qualitätsmerkmale lassen sich mit Zahlenwerten, den sogenannten Qualitätsparametern beschreiben, beispielsweise die Masse in Gramm. Aber auch anderen Qualitätsmerkmalen, wie z.B. der Maßgenauigkeit, Formgenauigkeit, Oberfläche und weiterer mechanischen und optischen Eigenschaften lassen sich Qualitätsparameter, also Zahlenwerte zuordnen. Die von einem hergestellten Produkt, insbesondere Spritzguß-Teil, geforderten Qualitätsparameter sind beispielsweise auf der Formteilzeichnung und/oder in einem Pflichtenheft meist in Form von Sollwerten oder Sollwertbereichen, d.h. Sollwerten mit Toleranzgrenzen, festgelegt.

Denkt man an die Anzahl der Einstellparameter sowie deren Wertekombinationen an der Maschine und die gemessenen bzw. beurteilten Werte für die Qualitätsparameter, so wird schnell klar, daß die quantitative Bewertung von qualitativ teilweis bekannten Abhängigkeiten auch für den erfahrenen Maschineneinsteller (Spritzgießer) ohne Hilfsmittel nicht beherrschbar ist. Das Ergebnis ist, daß vorhandene Qualitäts- und Leistungsreserven nicht genützt werden.

Aufgabe der Erfindung ist es daher, ein Verfahren zur Steuerung einer Maschine für die Herstellung von Produkten der eingangs genannten Gattung einzugeben, das dem Maschineneinsteller die Steuerung der Maschine zur Herstellung von Produkten unter Berücksichtigung vorgeschriebener Qualitätsparameter wesentlich erleichtert.

Dies wird erfindungsgemäß dadurch erreicht, daß zur Steuerung der Maschine die Sollwerte bzw. Sollwertbereiche für mindestens zwei ausgewählte Qualitätsparameter in eine Steuereinrichtung eingegeben werden, und daß durch die Steuereinrichtung anhand der gespeicherten Kenndatenfelder zumindest ein Satz von ausgewählten Einstellparametern ermittelt wird, bei dem gleichzeitig alle vorgegebenen Qualitätsparameter den jeweils vorgegebenen Sollwerten entsprechen bzw. in den vorgegebenen Sollwertbereichen liegen.

Die Grundidee der Erfindung besteht also darin, die eigentlichen Zielgrößen, nämlich die Qualitätsparameter einzugeben, und daraus aus den bekannten Kenndatenfeldern mögliche Sätze bzw. den besten Satz von Einstellparametern zu errechnen, bei dem gleichzeitig alle vorgegebenen Qualitätsparameter erzielt werden.

Die Aufnahme von Kenndatenfeldern in einem Lernzyklus, die die Abhängigkeit eines oder mehrerer gemessener Qualitätsparameter von mehreren Einstell- bzw. Prozeßparametern enthalten, ist aus der DE-OS 39 27 995 bereits bekannt. Anders als beim erfindungsgemäßen Verfahren werden dort die Kenndatenfelder allerdings nicht zur Steuerung der Spritzgießmaschine über die Qualitätsparameter herangezogen. Vielmehr wird dort lediglich die isobare Nachdruckdauer und/oder der isobare Nachdruck in Abhängigkeit von den Kenndatenfeldern gesteuert.

Beim erfindungsgemäßen Verfahren ist vorteilhaft vorgesehen daß, der bzw. die von der Steuereinrichtung ermittelte(n) Satz bzw. Sätze von Einstellparametern angezeigt oder ausgedruckt werden, wobei vorzugsweise für jeden Satz auch eine graphische Darstellung der Lage der Qualitätsparameter zum eingegebenen Sollwertbereich erfolgt. Nachdem der Maschineneinsteller ausgewählte, entscheidende Qualitätsparameter (beispielsweise bestimmte Maße, optische Qualitäten, Masse, etc.) in die Steuereinrichtung eingegeben hat, berechnet diese für ihn die möglichen Sätze von Einstellparametern, die zu den angegebenen Qualitätsparametern führen. Der Maschineneinsteller kann dann einen von diesen möglichen Sätzen auswählen und an der Maschine einstellen. Insbesondere wenn nur ein möglicher Satz von Einstellparametern vorhanden ist, ist es durchaus auch denkbar und vorteilhaft, daß der von der Steuereinrichtung ermittelte Satz von Einstellparametern automatisch durch die Maschinensteuerung an der Maschine eingestellt wird. Selbstverständlich ist es in diesem Fall möglich, daß der Maschineneinsteller den von der Steuereinrichtung gelieferten Vorschlag für die Einstellparameter bestätigen kann, bevor diese tatsächlich eingestellt werden. Grundsätzlich ist es auch denkbar, wenngleich auch nicht nötig, daß der Maschineneinsteller den von der Maschinensteuerung vorgeschlagenen Satz von Einstellparametern etwas abändert.

Liefert die Maschinensteuerung zu den angegebenen Qualitätsparametern mehrere Sätze von möglichen Einstellparametern, so ist neben der "händischen" Auswahl durch den Maschineneinsteller auch eine automatische Auswahl durch die Steuereinrichtung der Maschine selbst möglich. Grundsätzlich kann einer der möglichen Sätze von Einstellparametern nach dem Zufallsprinzip ausgewählt werden, da ja alle von der Steuereinrichtung gelieferten Sätze von Einstellparametern zu den gewünschten eingegebenen Qualitätsparametern der hergestellten Produkte führen. Eine andere bevorzugte Möglichkeit besteht darin, daß bei mehr als einem von der Steuereinrichtung ermittelten Satz von Einstellparametern, einer dieser Sätze von der Steuereinrichtung ausgewählt und automatisch an der Maschine eingestellt wird. Alternativ kann vorgesehen sein, daß die Maschinensteuerung jenen Satz von Einstellparametern auswählt, bei dem der Energieverbrauch der Maschine am geringsten ist. Als Maß für den Energieverbrauch können bestimmte Einstellparameter, beispielsweise der Einspritzdruck, herangezogen werden. Eine weitere Alternative bestünde darin, daß die Maschinensteuerung jenen Satz von Einstellparametern auswählt, bei dem die höchste Produktionsrate vorliegt. Zur Bewertung der Produktionsrate (Zykluszeit) können beispielsweise der Einstellparameter, Zylinder- und Werkzeugtemperaturen vor der Einspritzarbeit herangezogen werden.

Weitere Vorteile und Einzelheiten der Erfindung werden anhand der nachfolgenden Figurenbeschreibung näher erläutert.

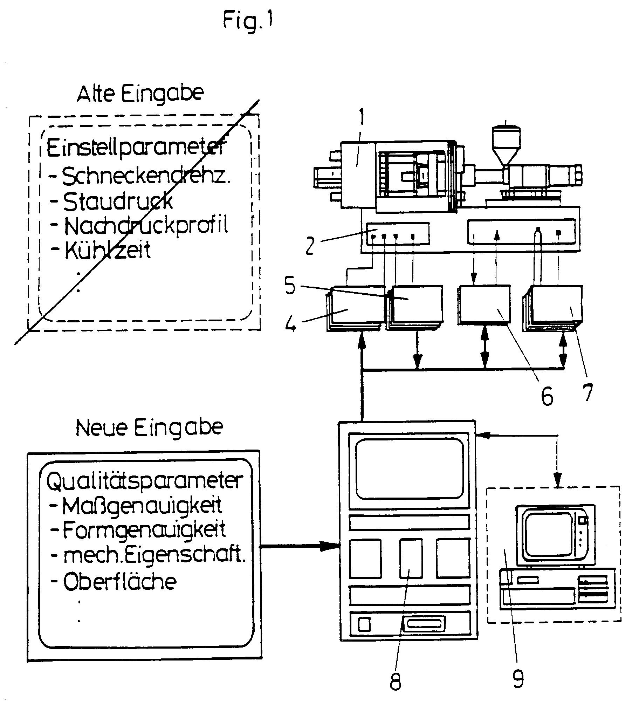

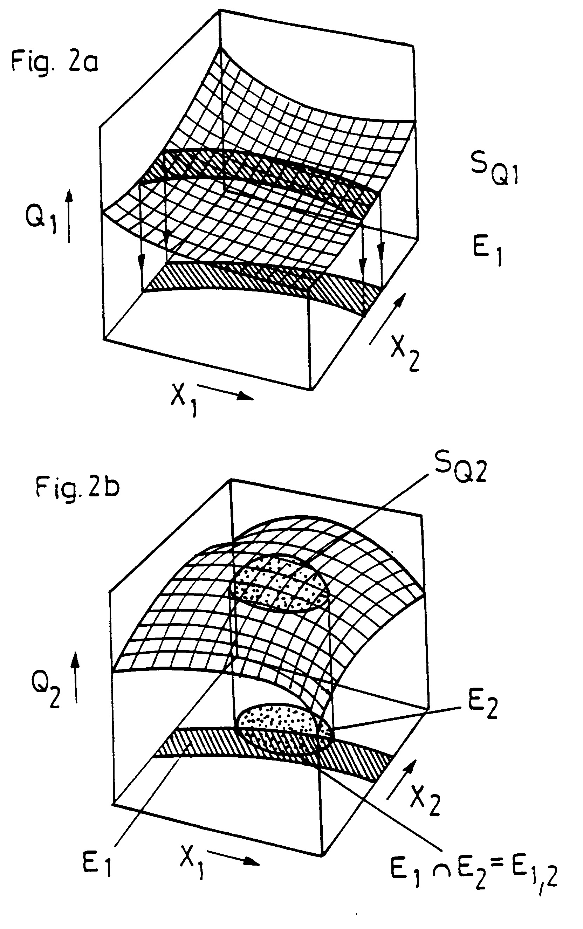

Die Fig. 1 zeigt eine schematische Darstellung einer Spritzgießmaschine mit angeschlossener Steuereinrichtung zur Durchführung eines Ausführungsbeispiels des erfindungsgemäßen Verfahrens. Die Fig. 2a und 2b zeigen jeweils die funktionelle Abhängigkeit eines Qualitätsparameters von zwei Einstellparametern.

Zur Steuerung der in Fig. 1 dargestellten Spritzgießmaschine für die Herstellung von Kunststoff-Spritzgußteilen ist eine Steuereinrichtung vorgesehen, die eine programmierbare Mikroprozessorsteuerung 8 für die Spritzgießmaschine umfaßt, welche gegebenenfalls mit einem Zentralcomputer kommunizieren kann. Beim vorliegenden Ausführungsbeispiel steuert die Steuereinrichtung die Spritzgießeinrichtung über Digitalausgangskarten 4, welche Schaltelemente, Ventile oder dergleichen an der Spritzgießmaschine steuert. Eine Rückmeldung aus der Spritzgießmaschine, beispielsweise von einem Endschalter, ist über die Digitaleingangskarten 5 möglich. Analoge Einstellparameter der Spritzgießmaschine 1 werden über die Analogkarte gesteuert bzw. durch einen laufenden Soll-Ist-Vergleich geregelt. Für die Temperatursteuerung bzw. -regelung können gesonderte Temperaturkarten 7 vorgesehen sein. Über die Steuereinrichtung können die Einstellparameter der Spritzgießmaschine (beispielsweise die Massezylindertemperaturen, die Schneckendrehzahl, der Staudruck, die Temperatur- und Durchflußmenge eines Kühl- oder Temperiermediums, die Einspritzgeschwindigkeit, der Hydraulikdruck im Spritzzylinder, der Schmelzedruck im Schneckenvorraum oder Werkzeug, der Nachdruck oder die Kühlzeit) verändert und eingestellt werden. Bisher mußte der Maschineneinsteller diese Parameter beispielsweise über eine Tastatur oder Regelelemente, wie Drehknöpfe oder Schieber, in die Steuereinrichtung eingeben. Dabei ist auch für den erfahrenen Maschineneinsteller die quantitative Bewertung von Wertekombinationen der Einstellparameter an der Spritzgießmaschine auf die Qualitätsparameter der hergestellten Teile praktisch nicht beherrschbar.

Die Erfindung sieht nun vor, daß anstelle der alten Eingabe der Einstellparameter nunmehr eine neue Eingabe der Qualitätsparameter der hergestellten Produkte zur Steuerung der Maschine vorgenommen wird. Diese Qualitätsparameter können über einzelne Einstellelemente, wie Drehknöpfe oder Schieber, aber auch über die Tastatur eines Terminals in die Steuereinrichtung eingegeben werden. Die Grundidee der Erfindung besteht darin, in einem Lernzyklus ermittelte und gespeicherte Kenndatenfelder, die die Abhängigkeit der Qualitätsparameter der hergestellten Produkte von den Einstellparametern der Maschine angeben, auszunutzen, um durch Vorgabe von mindestens zwei Qualitätsparametern einen oder mehrere Sätze von Einstellparameter zu ermitteln, bei denen gleichzeitig alle vorgegebenen Qualitätsparameterwerte erfüllt sind.

Zunächst wird festgelegt, welche Qualitätsparameter entscheidend sind. Dazu kann entweder aus einer Liste ausgewählt werden oder zusätzlich eigene Qualitätsparameter definiert werden, die jeweils ein Qualitätsmerkmal zahlenmäßig beschreiben. Grundsätzlich wäre es nun möglich, in einem Lernzyklus den Einfluß aller Einstellparameter auf die ausgewählten Qualitätsparameter zu untersuchen. Es ist jedoch günstiger, zunächst qualitätsrelevante Einstellparameter auszuwählen und weniger qualitätsrelevante Einstellparameter nicht in die erfindungsgemäße Steuerung miteinzubeziehen. Diese weniger relevanten Einstellparameter können im Lernzyklus und im später folgenden Produktionszyklus in einer Grundeinstellung verbleiben.

Für eine erste Vorauswahl der zur Steuerung der Maschine über die ausgewählten Qualitätsparameter herangezogenen Einstellparameter kann eine beispielsweise aus Erfahrungswerten unter Berücksichtigung des Kunststoffes, der Formteil- und Werkzeugkonstruktion erstellte Tabelle benutzt werden, die die grundsätzliche Beeinflußbarkeit von Qualitätsparametern durch Einstellparameter der Maschine zahlenmäßig bewertet, wobei bevorzugt jene Einstellparameter ausgewählt werden, bei denen die Summe aller Bewertungszahlen einen vorbestimmten Wert überschreitet. Die dabei ausgewählten Einstellparameter werden für eine darauffolgende Voruntersuchung vorgeschlagen. Grundsätzlich ist es auch möglich, diesen Vorschlag nachträglich abzuändern, d.h. es können Einstellparameter für die folgende Voruntersuchung davon weggenommen bzw. dazu hinzugefügt werden. Die genannte Tabelle erlaubt also eine erste Vorauswahl, bei der jedenfalls Einstellparameter, die sich auf die ausgewählten Qualitätsmerkmale praktisch überhaupt nicht auswirken, ausgeschieden werden können.

Für eine weitere Vorauswahl bzw. Voruntersuchung der zur Steuerung der Maschine über die ausgewählten Qualitätsparameter herangezogenen Einstellparameter kann eine Serie von Probeprodukten hergestellt werden, wobei für jeden Einstellparameter an dessen maximalem und an dessen minimalem Einstellwert ein Produkt hergestellt wird und dessen Qualitätsparameter erfaßt werden, während sich die übrigen Einstellparameter in einer Grundeinstellung befinden. Diese Grundeinstellung kann beispielsweise die Mittelstellung zwischen dem maximalen und minimalen Einstellwert sein. Aus den an den Probeprodukten gemessenen Qualitätsparameterdaten wird anschließend für jeden Qualitätsparameter und jeden Einstellparameter ein Maß für die Beeinflußbarkeit des Qualitätsparameters durch den Einstellparameter ermittelt und in eine Tabelle eingetragen. Um eine einheitliche Beurteilung der Einflüsse auf die Qualitätsparameter durchführen zu können, müssen die Qualitätsparameter normiert werden. Dies kann z.B. mit Hilfe der Toleranzgrenzen erfolgen Um ein Maß für die Beeinflußbarkeit des i-ten Qualitätsparameters durch den Einstellparameter zu erhalten, kann der gemessene Qualitätsparameterwert $Q_i$max bei maximalem Einstellwert des Einstellparameters vom gemessenen Qualitätsparameterwert $Q_i$min bei minimalem Einstellwert des Einstellparameter subtrahiert werden und diese Differenz durch die Differenz aus einer oberen $T_i$max und unteren $T_i$min dividiert werden, wobei die obere und untere Toleranzgrenze die Grenzen des vorgegebenen Sollwertbereiches für den Qualitätsparameter darstellen. Das beschriebene Verhältnis

$$\frac{(Q_i max - Q_i min)}{(T_i max - T_i min)}$$

stellt ein Maß für die Beeinflußbarkeit des i-ten Qualitätsparameters durch den jeweils veränderten Einstellparameter dar. Falls der Toleranzbereich (Sollwertbereich) des Qualitätsparameters innerhalb der gemessenen Bandbreite liegt, kann mit Hilfe des entsprechenden Einstellparameters der Qualitätsparameter direkt beeinflußt werden. Im Fall, daß der Toleranzbereich außerhalb liegt, kann man entweder keine Beeinflußung über den Einstellparameter erreichen oder diesen Einfluß nur mit Kombination mit einem anderen Einstellparameter erzielen. Es ist deshalb sinnvoll, ein erweitertes Maß zu definieren, in dem das oben definierte Maß mit den Prozentanteil des innerhalb der gemessenen Bandbreite liegenden Toleranzbereichs multipliziert wird. Dieses Maß lautet dann

$$\frac{(Q_i max - Q_i min)}{(T_i max - T_i min)} \text{ x Prozentanteil des Toleranzbereichs für} Qi \text{ im gemessenen Bandbereich (Qimin, Qimax)}.$$

Für jeden Einstellparameter und für jeden Qualitätsparameter können diese Maße definiert und in einer Tabelle aufgelistet werden:

|        | $QP_1$ | $QP_2$ | ..... |
|--------|--------|--------|-------|
| $TP_1$ | 0.1    | 3.4    |       |
| $TP_2$ | 2.5    | 0.3    |       |
| $TP_3$ | 0.6    | 0.8    |       |
|        | .      |        |       |
|        | .      |        |       |
|        | .      |        |       |
|        | .      |        |       |

Außerdem kann die Lage des Toleranzbereichs (Sollwertbereichs) und des Meßbereichs (Bandbreite) der einzelnen Qualitätsparameter in einer graphischen Darstellung, die beispielsweise auf einem Bildschirm angezeigt oder ausgedruckt wird, veranschaulicht werden. Mit Hilfe der oben angeführten Maße kann ein Reihungsvorschlag für die Einstellparameter vorgenommen werden. Damit kann eine bestimmte Zahl von Einstellparametern entweder laut Vorschlag oder nach eigener Wahl herausgegriffen werden. Um den Rechen- und Arbeitsaufwand im Lernzyklus gering zu halten, kann man beispielsweise drei Einstellparameter auswählen. Grundsätzlich sind jedoch auch mehr oder weniger als drei Einstellparameter denkbar und möglich. Um die Abhängigkeit der einzelnen Qualitätsparameter $Q_j$ von den ausgewählten r-Einstellparametern quantitativ zu erfassen, macht man einen Polynomansatz der Form

$$Q_j = P_{1j}^{(g1)}(x1) \cdot P_{2j}^{(g2)}(x_2) \ldots \ldots P_{rj}^{(gr)}(x_r),$$

wobei $P_{ij}^{(gi)}(x_i)$ ein Polynom vom Grad $g_i$ in dem Einstellparameter $x_i$ ist. Die in diesem Ansatz nach Ausmultiplikation der Polynome enthaltenen konstanten Koeffizienten (Regressionskonstanten) werden mit Hilfe einer Regressionsanalyse, beispielsweise mit Hilfe der Methode der kleinsten Quadrate, aus den im Lernzyklus in Abhängigkeit von den Ein-

stellparametern gemessenen Qualitätsparameter $Q_j$ ermittelt. Dabei muß die Zahl der Kombinationen von Einstellparametern zumindest der Zahl der im genannten Polynomansatz enthaltenen konstanten Koeffizienten entsprechen, um eine eindeutige Bestimmung dieser Koeffizienten zu ermöglichen. Im allgemeinen wird es reichen, lineare und quadratische Einflüsse der Einstellparameter auf die Qualitätsparameter zu berücksichtigen, das heißt, daß alle Polynome $P_{ij}^{(gi)}(x_i)$ vom Grad $g_i=2$ sind. Für den oben beschriebenen bevorzugten Fall von drei Einstellparametern würde dann der Polynomansatz die folgende Gestalt aufweisen:

$$Q_j = A_{1j}+A_{2j}x_1+A_{3j}x_2+A_{4j}x_3+A_{5j}x_1^2+A_{6j}x_2^2+A_{7j}x_3^2+ +A_{8j}x_1x_2+....+A_{27j}x_1^2x_2^2x_3^2.$$

Dieser Ansatz für den j-ten Qualitätsparameter $Q_j$ weist 27 Regressionskonstanten $A_{ij}$ (i=1,.....,27) auf. Um diese zu bestimmen, müssen im Lernzyklus mindestens 27 Probeprodukte bei verschiedenen Wertekombinationen der Einstellparameter hergestellt und hinsichtlich des Qualitätsparameters $Q_j$ vermessen werden. Bei den ausgewählten drei Einstellparametern $x_1$, $x_2$ und $x_3$ kann dies dadurch geschehen, daß im Lernzyklus von jedem dieser Parameter jeweils drei verschiedene Werte eingestellt werden. Man erhält dann insgesamt 27 Wertekombinationen. Selbstverständlich können die bei einer Wertekombination von Einstellparametern im Lernzyklus hergestellten Produkte gleich im Hinblick auf mehrere Qualitätsparameter untersucht werden. Damit ist es beim aufgezeigten Beispiel mit einem quadratischen Polynomansatz und drei Einstellparametern mit 27 Wertekombinationen für die Einstellparameter im Lernzyklus möglich, die Regressionskonstanten $A_{ij}$ aller Qualitätsparameter $Q_j$ zu bestimmen. Danach ist die funktionelle Abhängigkeit jedes ausgewählten Qualitätsparameters $Q_j$ von den ausgewählten Einstellparametern $x_1$, $x_2$ und $x_3$ (im allgemeinen Fall $x_1$,.....,$x_r$), also das Kenndatenfeld bekannt.

Grundsätzlich reicht es im Lernzyklus aus, für jeden Satz von Einstellwerten der Einstellparameter ein Produkt herzustellen. Günstiger ist es jedoch, wenn für jeden Satz von Einstellwerten der Einstellparameter im Lernzyklus mehrere vorzugsweise mindestens fünf Produkte hergestellt werden. Dies erlaubt einmal eine genauere Ermittlung der Qualitätsparameter als Mittelwert über die Qualitätsparameter der jeweils mit gleichen Einstellparametern hergestellten Produkte und damit ein genaueres Kenndatenfeld, das die Abhängigkeit des Qualitätsparameters von den Einstellparametern angibt. Außerdem können diese ermittelten Daten für eine Korrelations- und/oder Varianzanalyse herangezogen werden, um den Einfluß eines Einstellparameters oder einer Kombination von Einstellparametern auf ein Qualitätsparameter zu ermitteln. Dies kann dazu benutzt werden, im Regressionsansatz (beispielsweise im obigen Polynomansatz) bestimmte Einstellparameter bzw. Kombinationen von Einstellparametern von vorne herein wegzulassen und damit den Rechenaufwand zu verringern.

Die Methoden der Korrelation- und Varianzanalyse seien etwas näher erläutert:

Die Korrelationsanalyse erlaubt eine Untersuchung auf lineare Einflüsse.

i       i-te Messung
$t_i$       Einstellparameter der i-ten Messung
$Q_i$       Qualitätsparameter der i-ten Messung
tm       Mittelwert der Einstellparameter
Qm       Mittelwert der Qualitätsparameter

Der Korrelationskoeffizient hat folgende Gestalt:

$$\frac{\sum (t_i-tm)*(Q_i-Qm)}{\sqrt{\sum (t_i-tm)^2 * \sum (Q_i-Qm)^2}}$$

Dieser Koeffizient bewegt sich im Bereich -1 bis +1. Eine Abhängigkeit liegt vor, wenn der Koeffizient betragsmäßig möglichst groß ist.

Die Varianzanalyse erlaubt eine Untersuchung auf allgemeine Abhängigkeiten. Bei der einfachen Varianzanalyse kann der Einfluß eines Einstellparameters auf einen Qualitätsparameter untersucht werden, z.B.:

| Massetemperatur (Einstellparam.) | Masse (Qualitätsparameter) | Mittelwert Masse | Varianz |
|---|---|---|---|
| 200°C | 88,75,68,.... | m1=87.6 | v1=107.7 |
| 210°C | 78,... | m2=75.1 | v2=156.2 |
| 220°C | 71,65,... | m3=65.3 | v3=194.8 |
|  |  | m =76.0 |  |

Ein Maß für die Abhängigkeit stellt folgender Ausdruck dar:

$$\frac{(m1\text{-}m)^2+(m2\text{-}m)^2+(m3\text{-}m)^2}{v1+v2+v3}$$

Falls dieses Maß kleiner einer bestimmbaren Konstanten ist, so kann kein Einfluß angenommen werden. Sonst kann man annehmen, daß ein Einfluß vorhanden ist.

Man kann die Varianzanalyse auf zwei Faktoren ausdehnen. In diesem Fall erhält man Tests, ob ein einzelner Faktor einen Einfluß hat und ob beide Faktoren gemeinsam einen Einfluß auf den Qualitätsparameter nehmen.

Mit Hilfe der Varianzanalyse können Einstellparameter bzw. Kombinationen von Einstellparametern aus dem oben genannten Regressionsansatz ausgeschieden und damit der Rechenaufwand verringert werden.

Beim erfindungsgemäßen Verfahren werden nun die im Lernzyklus ermittelten und abgespeicherten Kenndatenfelder dazu ausgenutzt, um die Maschine über die Steuereinrichtung durch Eingabe von mindestens zwei ausgewählten Qualitätsparametern zu steuern, wobei durch die Steuereinrichtung anhand der gespeicherten Kenndatenfelder zumindest ein Satz von ausgewählten Einstellparametern ermittelt wird, bei dem gleichzeitig alle vorgegebenen Qualitätsparameter den jeweils vorgegebenen Sollwerten entsprechen bzw. in den vorgegebenen Sollwertbereichen liegen.

In den Fig. 2a und 2b ist dargestellt, wie aus den bekannten Kenndatenfeldern bei vorgegebenen Qualitätsparametern-Sollwertbereichen die möglichen Einstellparameter sukzessive eingeengt werden können. Die Berechnungen können beispielsweise in einem entsprechend programmierten Mikroprozessor oder Personal-Computer durchgeführt werden.

Die Fig. 2a beschreibt der einfachen graphischen Darstellung halber die Abhängigkeit eines ersten Qualitätsparameters $Q_1$ von lediglich zwei Einstellparametern. In der Praxis können selbstverständlich mehrere Einstellparameter berücksichtigt werden. Mit $S_{Q1}$ ist der Sollwertbereich für den ersten Qualitätsparameter gezeigt, welcher in die Steuereinrichtung eingegeben wird. Diese ermittelt dann aus dem bekannten gespeicherten Kenndatenfeld jene Einstellparameterkombinationen ($x_1$, $x_2$) bei deren Einstellung der Qualitätsparameter $Q_1$ im Sollwertbereich $S_{Q1}$ liegt. Die möglichen Einstellparameter ($x_1$, $x_2$) liegen im Einstellfeld $E_1$.

Fig. 2 zeigt das Kenndatenfeld eines zweiten Qualitätsparameters $Q_2$ in Abhängigkeit von denselben Einstellparametern $x_1$ und $x_2$. Aus dem eingegebenen Sollwertbereich $S_{Q2}$ für den Qualitätsparameter $Q_2$ wird in der Steuereinrichtung das Einstellfeld $E_2$ ermittelt. Liegen die Einstellparameter ($x_1$, $x_2$) im Einstellfeld $E_2$, so liegt der Qualitätsparameter $Q_2$ im Sollwertbereich $S_{Q2}$. Schneidet man nun den Einstellbereich $E_2$ mit dem aus Fig. 2a übertragenen Einstellbereich $E_1$, so erhält man einen Einstellbereich $E_{1,2}$, der jenen Bereich für die Einstellparameter ( $x_1$, $x_2$) angibt, bei dem der Qualitätsparameter $Q_1$ in seinem Sollwertbereich $S_{Q1}$ und gleichzeitig der Qualitätsparameter $Q_2$ in seinem Sollwertbereich $S_{Q2}$ liegt. Eine weitere Einengung des Einstellbereichs für die Qualitätsparameter $x_1$ und $x_2$ kann durch Berücksichtigung weiterer (hier nicht dargestellter) Qualitätsparameter erfolgen, sodaß das Ergebnis beispielsweise auch nur eine Einstellkombination ($x_1$, $x_2$), das heißt ein Arbeitspunkt übrig bleibt. Einen solchen Arbeitspunkt kann die Maschinensteuerung gegebenenfalls nach Bestätigung durch den Maschineneinsteller automatisch selbst an der Maschine einstellen. Bleiben nach der Berücksichtigung aller ausgewählten Qualitätsparameter zunächst noch mehrere Sätze von möglichen Einstellparametern übrig, so kann zunächst für jeden Satz ($x_1$, $x_2$) eine graphische Darstellung der Lage der Qualitätsparameter zum jeweiligen eingegegenen Sollwertbereich erfolgen. Der Maschineneinsteller kann dann einen der angebotenen Sätze von Einstellparametern auswählen. Es ist aber auch möglich, daß die Steuereinrichtung automatisch eine solche Auswahl trifft, in dem sie beispielsweise jenen Satz von Einstellparametern auswählt und vorschlägt, bei dem die Abweichung der Qualitätsparameter von der Mitte der Sollwertbereiche am geringsten ist. Es ist auch möglich, daß die Maschinensteuerung jenen Satz von Einstellparametern auswählt, bei dem der Energieverbrauch der Maschine am geringsten ist oder bei dem die Produktionsrate am höchsten ist.

Grundsätzlich ist es auch denkbar, daß es für die geforderten Qualitätsparameter keinen Satz von ausgewählten Einstellparametern gibt, bei dem gleichzeitig alle vorgegebenen Qualitätsparameter im Sollwertbereich liegen. In diesem Fall kann die Maschinensteuerung eine entsprechende Anzeige liefern. Es kann vorteilhafterweise auch angezeigt werden, bei welchen Sätzen bzw. Kombinationen von ausgewählten Einstellparametern immerhin noch möglichst viele Qualitätsparameter in den eingegebenen Sollwertbereichen liegen. Es kann dann gegebenenfalls auch einen Qualitätsparameter verzichtet werden und eine Einstellkombination gefunden werden, bei der zumindest alle übrigen Qualitätsparameter im Sollwertbereich liegen. Es kann aber beispielsweise auch eine Anzeige erfolgen, daß eine Korrektur eines Werkzeugmaßes notwendig ist.

Das erfindungsgemäße Verfahren eignet sich insbesondere zur Steuerung einer Spritzgießmaschine für die Herstellung von Kunststoff-Spritzgußteilen, ist jedoch nicht auf eine solche Spritzgießmaschine beschränkt. Mit dem erfindungsgemäßen Verfahren ist eine präzise Steuerung einer Maschine für die Herstellung von Produkten über die Vorgabe der eigentlichen Zielgrößen, nämlich der Qualitätsparameter der hergestellten Produkte möglich, womit vorhandene Qualitäts- und Leitungsreserven der Maschine ausgenutzt werden können.

# EP 0 603 244 B1

**Patentansprüche**

1. Verfahren zur Steuerung einer Maschine (1) für die Herstellung von Produkten, insbesondere zur Steuerung einer Spritzgießmaschine für die Herstellung von Kunststoff-Spritzgußteilen, dadurch gekennzeichnet, daß in einem Lernzyklus Kenndatenfelder ermittelt und gespeichert werden, die die Abhängigkeit ausgewählter Qualitätsparameter ($Q_i$) der hergestellten Produkte von ausgewählten Einstellparametern ($t_i$, $x_i$) der Maschine (1) angeben, daß zur Steuerung der Maschine (1) die Sollwerte bzw. Sollwertbereiche für mindestens zwei ausgewählte Qualitätsparameter ($Q_i$) in eine Steuereinrichtung (8) eingegeben werden, und daß durch die Steuereinrichtung (8) anhand der gespeicherten Kenndatenfelder zumindest ein Satz von ausgewählten Einstellparametern ($t_i$, $x_i$) ermittelt wird, bei dem gleichzeitig alle vorgegebenen Qualitätsparameter ($Q_i$) den jeweils vorgegebenen Sollwerten entsprechen bzw. in den vorgegebenen Sollwertbereichen liegen.

2. Verfahren nach Anspruch 1, dadurch gekennzeichnet, daß der bzw. die von der Steuereinrichtung (8) ermittelte(n) Satz bzw. Sätze von Einstellparametern ($t_i$, $x_i$) zu den eingegebenen Qualitätsparametern ($Q_i$) angezeigt oder ausgedruckt werden, wobei vorzugsweise für jeden Satz auch eine graphische Darstellung der Lage der Qualitätsparameter ($Q_i$) zum eingegebenen Sollwertbereich erfolgt.

3. Verfahren nach Anspruch 1 oder Anspruch 2, dadurch gekennzeichnet, daß bei einem einzigen von der Steuereinrichtung (8) ermittelten Satz von Einstellparametern ($t_i$, $x_i$), dieser automatisch durch die Maschinensteuerung an der Maschine (1) eingestellt wird.

4. Verfahren nach Anspruch 1 oder Anspruch 2, dadurch gekennzeichnet, daß bei mehr als einem von der Steuereinrichtung (8) ermittelten Satz von Einstellparametern ($t_i$, $x_i$), einer dieser Sätze von der Steuereinrichtung (8) ausgewählt und automatisch an der Maschine (1) eingestellt wird.

5. Verfahren nach Anspruch 4, dadurch gekennzeichnet, daß die Maschinensteuerung jenen Satz von Einstellparametern ($t_i$, $x_i$) auswählt, bei dem die Abweichung der Qualitätsparameter ($Q_i$) von der Mitte der Sollwertbereiche am geringsten ist.

6. Verfahren nach Anspruch 4, dadurch gekennzeichnet, daß die Maschinensteuerung jenen Satz von Einstellparametern ($t_i$, $x_i$) auswählt, bei dem der Energieverbrauch der Maschine (1) am geringsten ist.

7. Verfahren nach Anspruch 4, dadurch gekennzeichnet, daß die Maschinensteuerung jenen Satz von Einstellparametern ($t_i$, $x_i$) auswählt, bei dem die höchste Produktionsrate vorliegt.

8. Verfahren nach einem der Ansprüche 1 bis 7, dadurch gekennzeichnet, daß für eine erste Vorauswahl der zur Steuerung der Maschine (1) über die ausgewählten Qualitätsparameter ($Q_i$) herangezogene Einstellparameter ($t_i$, $x_i$) eine Tabelle benutzt wird, die grundsätzliche Beeinflußbarkeit von Qualitätsparameter ($Q_i$) durch Einstellparameter ($t_i$, $x_i$) der Maschine (1) zahlenmäßig bewertet, wobei bevorzugt jene Einstellparameter ($t_i$, $x_i$) ausgewählt werden, bei denen die Summe aller Bewertungszahlen einen vorbestimmten Wert überschreitet.

9. Verfahren nach einem der Ansprüche 1 bis 8, dadurch gekennzeichnet, daß für eine Vorauswahl der zur Steuerung der Maschine über die ausgewählten Qualitätsparameter ($Q_i$) herangezogenen Einstellparameter ($t_i$, $x_i$) eine Serie von Probeprodukten hergestellt wird, wobei für jeden Einstellparameter ($t_i$, $x_i$) an dessen maximalem ($T_i$max)und an dessen minimalem Einstellwert ($T_i$min) ein Produkt hergestellt wird und dessen Qualitätsparameter ($Q_i$) erfaßt werden, während sich die übrigen Einstellparameter ($t_i$, $x_i$) in einer Grundeinstellung befinden, und daß anschließend aus den gemessenen Qualitätsparameterdaten für jeden Qualitätsparameter ($Q_i$) und jeden Einstellparameter ($t_i$, $x_i$) ein Maß für die Beeinflußbarkeit des Qualitätsparameters ($Q_i$) durch den Einstellparameter ($t_i$, $x_i$) ermittelt wird.

10. Verfahren nach Anspruch 9, dadurch gekennzeichnet, daß der gemessene Qualitätsparamter-Wert ($Q_i$max) bei maximalem Einstellwert des Einstellparameters ($T_i$max) vom gemessenen Qualitätsparameter-Wert ($Q_i$min) bei minimalem Einstellwert des Einstellparameters ($T_i$min) subtrahiert und diese Differenz durch die Differenz aus einer oberen und unteren Toleranzgrenze des Qualitätsparameters ($Q_i$) dividiert wird, wobei dieser Verhältniswert ein Maß für die Beeinflußbarkeit des Qualitätsparameters ($Q_i$) durch den Einstellparameter ($t_i$, $x_i$) darstellt.

11. Verfahren nach Anspruch 10, dadurch gekennzeichnet, daß der genannte Verhältniswert mit dem Prozentanteil des innerhalb der gemessenen Bandbreite liegenden Toleranzbereichs des Qualitätsparameters ($Q_i$) multipliziert wird, um ein weiteres Maß für die Beeinflußbarkeit des Qualitätsparameters ($Q_i$) durch den Einstellparameter ($t_i$, $x_i$)

zu erhalten.

**12.** Verfahren nach einem der Ansprüche 9 bis 11, dadurch gekennzeichnet, daß zumindest ein Beeinflußbarkeitsmaß in einer nach Qualitätsparametern ($Q_i$) einerseits und Einstellparametern ($t_i$, $x_i$) andererseits geordneten Tabelle aufgelistet werden.

**13.** Verfahren nach einem der Ansprüche 1 bis 12, dadurch gekennzeichnet, daß beim Lernzyklus zur Aufnahme der Kenndatenfelder für jeden Einstellparameter ($t_i$, $x_i$) mindestens drei Einstellwerte eingestellt werden.

**14.** Verfahren nach einem der Ansprüche 1 bis 13, dadurch gekennzeichnet, daß für jeden Satz von Einstellwerten der Einstellparameter ($t_i$, $x_i$) im Lernzyklus mehrere, vorzugsweise mindestens fünf Produkte hergestellt werden.

**15.** Verfahren nach Anspruch 14, dadurch gekennzeichnet, daß an den ermittelten Daten eine Korrelations- und/oder Varianzanalyse durchgeführt wird, um den Einfluß eines Einstellparameters ($t_i$, $x_i$) oder einer Kombination von Einstellparametern auf einen Qualitätsparameter ($Q_i$) zu ermitteln.

**16.** Verfahren nach einem der Ansprüche 1 bis 9, dadurch gekennzeichnet, daß für jeden Qualitätsparameter $Q_j$ (j = 1,...,m) wie an sich bekannt ein Polynomansatz der Form

$$Q_j = P_{1j}^{(g1)}(x_1) . P_{2j}^{(g2)}(x_2) ....... P_{rj}^{(gr)}(x_r)$$

gemacht wird, wobei $P_{ij}^{(gi)}(x_i)$ ein Polynom vom Grad $g_i$ in dem Einstellparameter $x_i$ ist und wobei die in diesem Ansatz nach Ausmultiplikation der Polynom enthaltenen konstanten Koeffizienten (Regressionskonstanten) mittels Regressionsrechnung, beispielsweise mit Hilfe der Methode der kleinsten Quadrate, aus den im Lernzyklus in Abhängigkeit von den Einstellparametern ($x_1$,...$x_r$) gemessenen Qualitätsparameter $Q_j$ ermittelt werden.

**17.** Verfahren nach Anspruch 16, dadurch gekennzeichnet, daß alle Polynome $P_{ij}^{(gi)}(x_i)$ vom Grad $g_i=2$ sind.

**18.** Verfahren nach Anspruch 16 oder 17, dadurch gekennzeichnet, daß drei Einstellparameter ausgewählt werden, das heißt r=3 ist.

**Claims**

**1.** A method of controlling a machine (1) for the manufacture of products, in particular for controlling an injection molding machine for the manufacture of plastic injection molded parts, characterised in that in a learning cycle characteristic data arrays are determined and stored, which indicate the dependency of selected quality parameters ($Q_i$) of the manufactured products on selected setting parameters ($t_i$, $x_i$) of the machine (1), that, to control the machine (1), the reference values or reference value ranges for at least two selected quality parameters ($Q_i$) are inputted into a control means (8), and that at least one set of selected setting parameters ($t_i$, $x_i$) in which simultaneously all predetermined quality parameters ($Q_i$) correspond to the respectively predetermined reference values or lie in the predetermined reference value ranges is ascertained by the control means (8) by reference to the stored characteristic data arrays.

**2.** A method as set forth in claim 1 characterised in that the set or sets of setting parameters ($t_i$, $x_i$), which is or are ascertained by the control means (8), is or are displayed or printed out, in relation to the inputted quality parameters ($Q_i$), wherein preferably there is also a graphic representation of the position of the quality parameters ($Q_i$) relative to the inputted reference value range, for each set.

**3.** A method as set forth in claim 1 or claim 2 characterised in that, with a single set of setting parameters ($t_i$, $x_i$) which is ascertained by the control means (8), it is automatically set by the machine control system on the machine (1).

**4.** A method as set forth in claim 1 or claim 2 characterised in that, with more than one set of setting parameters ($t_i$, $x_i$), which is ascertained by the control means (8), one of said sets is selected by the control means (8) and automatically set at the machine (1).

**5.** A method as set forth in claim 4 characterised in that the machine control system selects that set of setting parameters ($t_i$, $x_i$) in which the deviation of the quality parameters ($Q_i$) from the center of the reference value ranges is at the lowest.

6. A method as set forth in claim 4 characterised in that the machine control system selects that set of setting parameters ($t_i$, $x_i$) in which the energy consumption of the machine (1) is at the lowest.

7. A method as set forth in claim 4 characterised in that the machine control system selects that set of setting parameters ($t_i$, $x_i$) in which the highest production rate occurs.

8. A method as set forth in one of claims 1 through 7 characterised in that, for an initial preselection of the setting parameters ($t_i$, $x_i$) which are used for controlling the machine (1) by way of the selected quality parameters ($Q_i$), use is made of a table which numerically evaluates the basic influenceability of quality parameters ($Q_i$) by setting parameters ($t_i$, $x_i$) of the machine (1), wherein preferably those setting parameters ($t_i$, $x_i$) are selected in which the sum of all evaluation numbers exceeds a predetermined value.

9. A method as set forth in one of claims 1 through 8 characterised in that, for preselection of the setting parameters ($t_i$, $x_i$) used for controlling the machine by way of the selected quality parameters ($Q_i$), a series of test products is manufactured, wherein a product is manufactured for each setting parameter ($t_i$, $x_i$) at the maximum setting value ($T_i max$) and at the minimum setting value ($T_i min$) thereof, and the quality parameters ($Q_i$) of that product are detected, while the other setting parameters ($t_i$, $x_i$) are in a basic setting, and that then a measurement in respect of the influenceability of the quality parameter ($Q_i$) by the setting parameter ($t_i$, $x_i$) is ascertained for each quality parameter ($Q_i$) and for each setting parameter ($t_i$, $x_i$) from the measured quality parameter data.

10. A method as set forth in claim 9 characterised in that the measured quality parameter value ($Q_i max$) at maximum setting value of the setting parameter ($T_i max$) is subtracted from the measured quality parameter value ($Q_i min$) at minimum setting value of the setting parameter ($T_i min$) and said difference is divided by the difference of an upper and a lower tolerance limit of the quality parameter ($Q_i$), wherein said ratio value represents a measurement in respect of the influenceability of the quality parameter ($Q_i$) by the setting parameter ($t_i$, $x_i$).

11. A method as set forth in claim 10 characterised in that said ratio value is multiplied by the percentage proportion of the quality parameter tolerance range which lies within the measured band width in order to obtain a further measurement in respect of the influenceability of the quality parameter ($Q_i$) by the setting parameter ($t_i$, $x_i$).

12. A method as set forth in one of claims 9 through 11 characterised in that at least one influenceability measurement is listed in a table arranged in accordance with quality parameters ($Q_i$) on the one hand and setting parameters ($t_i$, $x_i$) on the other hand.

13. A method as set forth in one of claims 1 through 12 characterised in that at least three setting values are set in the learning cycle for recording the characteristic data arrays for each setting parameter ($t_i$, $x_i$).

14. A method as set forth in one of claims 1 through 13 characterised in that a plurality of and preferably at least five products are manufactured for each set of setting values of the setting parameters ($t_i$, $x_i$) in the learning cycle.

15. A method as set forth in claim 14 characterised in that a correlation and/or variance analysis operation is carried out on the ascertained data in order to ascertain the influence of a setting parameter ($t_i$, $x_i$) or a combination of setting parameters on a quality parameter ($Q_i$).

16. A method as set forth in one of claims 1 through 9 characterised in that for each quality parameter $Q_j$ ($j = 1, ..., m$), as is known per se, a polynomial expression of the following form is made:

$$Q_j = P_{1j}^{(g1)}(x_1).P_{2j}^{(g2)}(x_2).......P_{rj}^{(gr)}(x_r)$$

17. A method as set forth in claim 16 characterised in that all polynomials $P_{ij}^{(gi)}(x_i)$ are of the degree $g_i = 2$.

18. A method as set forth in claim 16 or claim 17 characterised in that three setting parameters are selected, that is to say $r = 3$.

## Revendications

1. Procédé pour commander une machine (1) pour la fabrication de produits, en particulier pour commander une machine de moulage par injection pour la fabrication de pièces moulées par injection en matière synthétique, caractérisé en ce que, dans un cycle d'étude, des champs de données caractéristiques sont déterminés et mémorisés, qui indiquent la dépendance de paramètres de qualité ($Q_i$) choisis des produits fabriqués, de paramètres de réglage ($t_i$, $x_i$) choisis de la machine (1), en ce que, pour la commande de la machine (1), les valeurs de consigne ou les domaines de valeurs de consigne pour au moins deux paramètres de qualité choisis ($Q_i$) sont donnés dans un dispositif de commande (8), et en ce que, par le dispositif de commande (8), au moyen des champs de données caractéristiques mémorisés, au moins un jeu de paramètres de réglage ($t_i$, $x_i$) choisis est déterminé, par lequel, simultanément tous les paramètres de qualité ($Q_i$) donnés correspondent aux valeurs de consigne respectivement prescrites, ou se trouvent dans les domaines de valeurs de consigne prescrits.

2. Procédé selon la revendication 1, caractérisé en ce que le, ou les jeu(x) de paramètres de réglage ($t_i$, $x_i$) déterminé(s) par le dispositif de commande (8) sont indiqués aux paramètres de qualité ($Q_i$) introduits ou exprimés, auquel cas, de préférence pour chaque jeu, il s'ensuit aussi une représentation graphique de l'emplacement des paramètres de qualité ($Q_i$) pour le domaine de valeurs de consigne introduit.

3. Procédé selon la revendication 1 ou la revendication 2, caractérisé en ce que, pour un seul jeu de paramètres de réglage ($t_i$, $x_i$) déterminé par le dispositif de commande (8), celui-ci est réglé automatiquement sur la machine (1) par la commande de machine.

4. Procédé selon la revendication 1 ou la revendication 2, caractérisé en ce que, pour plus d'un jeu de paramètres de réglage ($t_i$, $x_i$) déterminé par le dispositif de commande (8), un de ces jeux est choisi par le dispositif de commande (8) et est réglé automatiquement sur la machine (1).

5. Procédé selon la revendication 4, caractérisé en ce que la commande de machine choisit chaque jeu de paramètres de réglage ($t_i$, $x_i$), pour lequel l'écart des paramètres de qualité ($Q_i$) par rapport au milieu des domaines de valeurs de consigne est minimal.

6. Procédé selon la revendication 4, caractérisé en ce que la commande de machine choisit chaque jeu de paramètres de réglage ($t_i$, $x_i$), pour lequel la consommation d'énergie de la machine (1) est minimale.

7. Procédé selon la revendication 4, caractérisé en ce que la commande de machine choisit chaque jeu de paramètres de réglage ($t_i$, $x_i$), pour lequel il existe le taux de production le plus élevé.

8. Procédé selon les revendications 1 à 7, caractérisé en ce que, pour une première présélection des paramètres de réglage ($t_i$, $x_i$) utilisés pour la commande de la machine (1) par l'intermédiaire des paramètres de qualité choisis ($Q_i$), on utilise un tableau qui estime de manière numérique l'influençabilité fondamentale du paramètre de qualité ($Q_i$) par les paramètres de réglage ($t_i$, $x_i$) de la machine (1), ces paramètres de réglage ($t_i$, $x_i$) étant de préférence choisis tels que la somme de tous les chiffres d'estimation dépasse une valeur prédéterminée.

9. Procédé selon l'une des revendications 1 à 8, caractérisé en ce que pour une présélection des paramètres de réglage ($t_i$, $x_i$) utilisés pour la commande de la machine par l'intermédiaire des paramètres de qualité ($Q_i$) choisis, une série de produits d'essai est fabriquée, pour chaque paramètre de réglage ($t_i$, $x_i$), à sa valeur de réglage maximum ($T_i max$) et à sa valeur de réglage minimum ($T_i min$) un produit étant fabriqué et son paramètre de qualité ($Q_i$) étant saisi, tandis que les paramètres de réglage ($t_i$, $x_i$) restants se trouvent dans un réglage de base et en ce que, par la suite, à partir des données de paramètres de qualité mesurées pour chaque paramètre de qualité ($Q_i$) et chaque paramètre de réglage ($t_i$, $x_i$), une grandeur est déterminée pour l'influençabilité du paramètre de qualité ($Q_i$) par le paramètre de réglage ($t_i$, $x_i$).

10. Procédé selon la revendication 9, caractérisé en ce que la valeur du paramètre de qualité mesurée ($Q_i max$) pour une valeur de réglage maximum du paramètre de réglage ($T_i max$) est soustraite de la valeur de paramètre de qualité mesurée ($Q_i min$) pour une valeur de réglage minimale du paramètre de réglage ($T_i min$) et cette différence est divisée par la différence provenant d'une limite de tolérance supérieure et inférieure du paramètre de qualité ($Q_i$), cette valeur comparative représentant une grandeur pour l'influençabilité du paramètre de qualité ($Q_i$) par le paramètre de réglage ($t_i, x_i$).

11. Procédé selon la revendication 10, caractérisé en ce que la valeur comparative citée est multipliée avec le pourcentage du domaine de tolérance, qui se trouve à l'intérieur de la largeur de bande mesurée, du paramètre de qualité ($Q_i$), pour obtenir une autre grandeur pour l'influençabilité du paramètre de qualité ($Q_i$) par le paramètre de réglage ($t_i$, $x_i$).

12. Procédé selon l'une des revendications 9 à 11, caractérisé en ce qu'au moins une grandeur d'influençabilité est répertoriée dans un tableau classé d'une part selon les paramètres de qualité ($Q_i$) et d'autre part selon les paramètres de réglage ($t_i$, $x_i$).

13. Procédé selon l'une des revendications 1 à 12, caractérisé en ce que, lors du cycle d'apprentissage, au moins trois valeurs de réglage sont réglées pour l'enregistrement des champs de données caractéristiques pour chaque paramètre de réglage ($t_i$, $x_i$).

14. Procédé selon l'une des revendications 1 à 13, caractérisé en ce que pour chaque jeu de valeurs de réglage des paramètres de réglage ($t_i$, $x_i$), dans le cycle d'apprentissage, plusieurs produits, de préférence au moins cinq, sont fabriqués.

15. Procédé selon la revendication 14, caractérisé en ce qu'aux valeurs déterminées, une analyse de corrélation et ou de variance est effectuée pour déterminer l'influence d'un paramètre de réglage ($t_i$, $x_i$), ou d'une combinaison de paramètres de réglage, sur un paramètre de qualité ($Q_i$).

16. Procédé selon l'une des revendications 1 à 9, caractérisé en ce que pour chaque paramètre de qualité $Q_j$ ($j = 1, ..., m$), une expression polynomiale de la forme

$$Q_j = P_{ij}^{(g1)}(x_1).P_{2j}^{(g2)}(x_2) .....P_{rj}^{(gr)}(x_r)$$

est réalisée comme connu en soi, $P_{ij}^{(gi)}(x_i)$ étant un polynôme de degré $g_i$ dans le paramètre de réglage $x_i$ et les coefficients constants (constantes de régression) contenus dans cette expression selon la multiplication des polynômes étant déterminés au moyen d'un calcul de régression, par exemple a l'aide de la méthode des moindres carrés, à partir des paramètres de qualité $Q_j$ mesurés dans le cycle d'apprentissage en fonction des paramètres de réglage ($x_1, ... x_r$).

17. Procédé selon la revendication 16, caractérisé en ce que tous les polynômes $P_{ij}^{(gi)}(x_1)$ sont de degré $g_i = 2$.

18. Procédé selon la revendication 16 ou 17, caractérisé en ce que trois paramètres de réglage sont choisis, c'est-à-dire que $r = 3$.

Fig.1

Alte Eingabe

Einstellparameter
- Schneckendrehz.
- Staudruck
- Nachdruckprofil
- Kühlzeit
  .
  .

Neue Eingabe

Qualitätsparameter
- Maßgenauigkeit
- Formgenauigkeit
- mech.Eigenschaft.
- Oberfläche
  .
  .

1

2

5

4

6  7

8  9

Fig. 2a

Fig. 2b